# EUROPEAN PATENT APPLICATION

(11) **EP 4 530 196 A1**
(43) Date of publication of application: **02.04.2025**
(21) Application number: 23201041.3
(22) Date of filing: 29.09.2023
(51) Int. Cl.: B64D 37/06

(54) **LINER SEGMENT SYSTEM**

(71) Applicant: Airbus Operations GmbH, 21129 Hamburg (DE)
(72) Inventor: Wriede, Stefan, Hamburg (DE); Vollmer, Malte, Hamburg (DE)
(74) Representative: LKGLOBAL Lorenz & Kopf Patentanwalt Attorney at Law PartG mbB

(57) **Abstract**

The invention relates to a liner segment system (10) for a frame bay (18) of a fuel tank structure (22), comprising:
a liner segment base body (12), wherein the liner segment base body (12) is adapted to float on fuel in the fuel tank structure (22),
a displacement body (14), wherein the displacement body (14) is arranged next to a lowest point of the liner segment base body (12),
such that a remaining portion of fuel within the fuel tank structure is reduced by displacing the fuel at the lowest point of the liner segment base body (12).

## Description

### Technical Field

The present invention relates to a liner segment system for a frame bay of a fuel tank structure, an arrangement for a tank structure, comprising a liner segment system and an airplane comprising said liner segment system.

### Background

In aircrafts, a liner in each framebay of the fuselage can be used as an additional protection of a tank structure for the fuel needed to operate the aircraft. In the undesired case, for example caused by malfunction of the undercarriage during takeoff and landing, that a hole in the fuselage structure leads to a fuel leakage, the liner is an additional safety barrier and covers the hole and hereby decreases the leakage rate.

To prevent corrosion caused by a liner next to the fuselage, in addition to the volume above the liner, there is an additional volume of fuel over or underneath the liner. The segments are closely connected to each other by means of profiles. This leads to the situation that within each lower frame bay a portion of unusable fuel remains within the tank and therefore a relevant portion of fuel remains unusable and unreachable for fuel pumps within the tank.

This either leads to a problem of weight due to the remaining fuel or even of fulfilling authorities' safety requirements. The total weight of the unused fuel that is unreachable for the fuel pumps at the picking points can add up to more than 350 liters, which leads to need to improve the possibility to reach the remaining fuel for the fuel pumps to address the above-mentioned problems.

### Summary of the invention

It is an object to increase the usable tank volume and save weight due to reduction of remaining fuel portion for fulfillment of authority and customer requirements.

This object is achieved by means of the subjects of the independent claims. Illustrative embodiments will be found in the dependent claims and the following description.

According to one aspect a liner segment system for a frame bay of a fuel tank structure is provided. The liner segment system comprises a liner segment base body, wherein the liner segment base body is adapted to float on fuel in the fuel tank structure. The liner segment system further comprises a displacement body, wherein the displacement body is arranged next to a lowest point of the liner segment base body.

Hence, a remaining portion of fuel within the fuel tank structure is reduced by displacing the fuel at the lowest point of the liner segment base body.

The described liner segment system is configured for a frame bay within a fuel tank structure and consists of two main components: the liner segment base body and the displacement body.

The significance of this configuration lies in its ability to efficiently manage fuel within the tank structure. By positioning the liner segment base body close to the lowest-level counterpart, the displacement of fuel at the lowest point becomes highly effective. This strategic placement optimizes the liner segment system's performance, contributing to enhanced fuel storage efficiency and management.

Hence, a concept is described to reduce the portion of remaining and therefore unusable fuel within a structural tank for the case that structural constraints are hindering the emptying of the tank.

It is proposed to position the displacement bodies in the area of trapped fuel. The displacement bodies may be limited in size by the manhole through which they will be installed.

The advantages are weight saving in case of displacement bodies are of lower density than fuel and reduction of remaining fuel portion for fulfillment of authority and customer requirements

Additional tie down structure may be necessary to keep all the displacement bodies in place and to prevent them from movement.

According to an embodiment the liner segment base body comprises an upper side and the displacement body is arranged on the upper side of the liner segment base body.

This specific arrangement carries notable implications. It serves a protective purpose by effectively shielding the displacement body from potential external impacts or wear, as it occupies the uppermost position above the liner segment base body. Furthermore, this positioning suggests a functional role in maintaining the balance and stability of the liner segment system. Placing the displacement body on top implies a top-down approach to stability, potentially aiding in the even distribution of weight across the fuel surface. This could contribute to a reduction in any tilting or instability of the liner segment system within the fuel tank. The placement of the displacement body on the upper side may also signify an efficiency aspect. It implies a close interaction between the displacement body and the liner segment base body, suggesting potential synergistic effects that enhance the system's ability to maintain balance within the fuel tank.

According to an embodiment the liner segment base body comprises a lower side and the displacement body is arranged on the lower side of the liner segment base body.

Placing the displacement body underneath the liner segment base body implies a potential role in enhancing stability by acting as a counterbalance. This positioning may be particularly beneficial for maintaining equilibrium, especially in dynamic situations, as it may lower the center of gravity of the liner segment system. Moreover, positioning the displacement body on the lower side suggests a deliberate utilization of space within the liner segment system. This could be advantageous for efficiently accommodating additional components or functionalities.

According to an embodiment the displacement body is connected to the liner segment base body, preferably via integral construction. This configuration provides a seamless connection between the displacement body and the liner segment base body. By being intricately connected, it suggests a high degree of structural cohesion. This can lead to various advantages, including enhanced reliability and durability of the liner segment system.

The preference for integral construction implies that these two components are likely manufactured as a single, unified unit. This can streamline the production process, reduce the number of separate parts, and potentially lower manufacturing costs. It may also improve the overall robustness of the system since there are fewer points of potential weakness, such as joints or fasteners.

According to an embodiment the displacement body comprises a foam.

Foam is known for its lightweight properties, making it particularly suitable for applications where weight considerations are essential, such as within fuel tank systems.

Furthermore, foam is often chosen for its versatility and ability to absorb shocks or vibrations, which can enhance the overall robustness and resilience of the displacement body. Additionally, foam is typically resistant to moisture, which is crucial for components within fuel tank systems where contact with fuel is inevitable.

Possible options for foam may include polyurethane closed cell foam like Baysafe^{(R)} 64IF80T by Covestro, Density: 80kg/m³, with glass fibre reinforced epoxy resin system cover ABS5009J39, Thickness: 0,1mm; and area weight: 205g/m².

According to an embodiment the displacement body comprises a hollow body.

The use of a hollow body for the displacement body suggests a specific structural configuration. Hollow bodies are known for their lightweight characteristics, making them well-suited for applications where minimizing weight is crucial, such as within fuel tank systems.

The hollow design also introduces the possibility of adjusting the volume of the displacement body. By altering the amount of air or other materials within the hollow space, allowing for precise control of the liner segment's behavior within the fuel tank. The hollow design may be provided by inflatable displacement bodies.

According to an embodiment the displacement body comprises at least one of a group consisting of PE, PP and PVC.

These materials are renowned for their resistance to various chemicals, making them exceptionally suitable for applications involving exposure to substances like fuel. This chemical resilience is particularly vital in a fuel tank system, ensuring that the displacement body remains robust and unaffected by contact with fuel or other substances present within the tank.

Moreover, PE, PP, and PVC possess a favorable combination of qualities, including being lightweight and durable. This combination is especially advantageous when considering the need to minimize weight, as is often the case in fuel tank applications. The lightweight nature of these materials contributes to the overall buoyancy of the liner segment system.

Furthermore, these materials are commonly employed in manufacturing processes, offering versatility in shaping and forming. This versatility can streamline the production of displacement bodies, allowing for intricate or custom designs tailored to specific needs.

According to an embodiment a liner out of aramid fiber with fluorosilicone with dissipative properties is provided.

According to an embodiment the displacement body comprises a multitude of detachable displacement sub-devices.

The displacement body may take on a unique configuration by incorporating multiple detachable displacement sub-devices. Instead of adhering to the conventional single-unit displacement body design, this approach presents a system comprised of individual, interrelated sub-devices that can be separated from each other for each frame bay or the complete tank structure.

This configuration offers several significant advantages. By allowing for the effortless addition or removal of sub-devices, this system becomes inherently adaptable. Users gain the ability to finely adjust the liner segment system to precisely match the distinct requirements of various fuel tank configurations. This adaptability to different tank sizes and layouts can substantially enhance the system's performance and efficiency.

Additionally, this configuration introduces a user-friendly maintenance. Should one of the sub-devices become damaged or require maintenance or replacement, it can be addressed individually, eliminating the need for extensive system-wide repairs or downtime. This not only reduces maintenance costs but also minimizes disruptions, ensuring that the liner segment system remains operational with minimal interruptions.

Furthermore, this approach empowers users with a high degree of customization. The individual sub-devices may be arranged in diverse configurations, thereby tailoring the system to address specific needs or to achieve precise buoyancy characteristics. This customization potential is particularly advantageous in situations where unique tank requirements or varying fuel levels must be accommodated.

According to an embodiment the sub-devices are connected in a form-fit manner.

This configuration signifies a deliberate approach to securing and aligning the sub-devices precisely. The form-fit connection implies that the sub-devices are configured in such a way that they interlock or mesh together seamlessly. This ensures a tight and secure integration, minimizing any potential movement or separation during operation.

The use of a form-fit connection enhances the overall stability and reliability of the displacement body system. It guarantees that the sub-devices work effectively functioning as a cohesive unit within the liner segment system. This can be particularly advantageous in maintaining displacement characteristics, ensuring the liner segment's reliable performance in various fuel tank conditions.

According to an embodiment the displacement body comprises a layer.

This configuration introduces an added layer of functionality to the displacement body. The layer serves as a protective shield, safeguarding the displacement body from the potentially corrosive or abrasive nature of fuel. It acts as a barrier that shields the underlying structure from wear and tear caused by prolonged exposure to fuel.

The protective layer enhances the displacement body's durability and longevity. It ensures that the displacement body can effectively continue its operation within the fuel tank structure over an extended period without succumbing to fuel-related corrosion or mechanical wear.

According to an embodiment a density of the displacement body is less than 90%, preferably less than 80%, more preferably less than 70% most preferably less than 50% of a density of a fuel to be displaced.

This density differential between the displacement body and the fuel within the tank is a crucial aspect of the design. By having a lower density than the fuel, the displacement body may effectively save weight of the liner segment of a fuel tank structure.

According to an embodiment the displacement body substantially follows the dimensions of the fuel tank structure.

This configuration involves tailoring the shape and size of the displacement body so that it effectively fits within the fuel tank, making the most of the available space. The term "substantially follows" implies that the displacement body aligns itself with the internal dimensions of the tank, ensuring a firm fit. This results in the efficient displacement of fuel throughout the entire tank. With the displacement body closely matching the tank's dimensions, it can effectively utilize the available space, thereby optimizing the tank's storage capacity. This ensures that the liner segment system contributes significantly to efficient fuel storage. Additionally, this configuration minimizes any unused space within the tank. Furthermore, the alignment with the tank's dimensions can enhance the stability and balance of the liner segment system.

According to another aspect an arrangement for a tank structure comprising a liner segment according to the above-mentioned embodiments is provided. The system further comprises a multitude of frame bays, a multitude of liner segments which is adapted to float on fuel in the tank structure. Each liner segment is adapted to float on fuel in one of the multitude of frame bays. Each liner segment comprises a liner segment base body, a multitude of connection profiles, wherein the multitude of connection profiles is adapted to connect the multitude of liner segments and the liner segment according to the above-mentioned embodiments. The system further comprises a fuel pump, wherein in the fuel pump is adapted to pump fuel out of the tank structure at fuel pump picking points. The system further comprises a displacement body, wherein the displacement body is arranged next to a lowest point of at least one of the liner segment base body, such that a remaining portion of fuel within the fuel tank structure is reduced by displacing the fuel at the lowest point of the liner segment base body.

The arrangement presented here is tailored for tank structures and comprises several key components, with a central focus on the innovative liner segment system as elaborated in previous embodiments. This liner segment system forms the cornerstone of a larger, highly efficient arrangement.

At its core, the system incorporates a multitude of frame bays, each designed to house a corresponding liner segment. These liner segments are meticulously crafted to float gracefully on the surface of the fuel contained within the tank structure. Within each liner segment, there exists a liner segment base body and an array of connection profiles. These profiles are engineered with precision to facilitate seamless connections between the individual liner segments, thereby forming a cohesive and adaptable network within the tank structure.

A critical component of the system is the fuel pump, strategically positioned to draw fuel from designated picking points within the tank structure. This pump serves as the means to evacuate fuel from the system when required, ensuring the efficient management and extraction of fuel resources.

However, the main aspect of this arrangement lies in its incorporation of a displacement body. This component is strategically positioned adjacent to the lowest point of at least one of the liner segment base bodies. This placement is thoughtfully designed to serve a vital purpose: by efficiently displacing fuel from the lowest point of the liner segment base body, it significantly reduces the volume of fuel that remains within the tank structure.

In practical terms, this system is an approach to optimizing the storage and management of fuel within tank structures. It seamlessly combines the functionality of liner segments, connection profiles, a fuel pump, and a displacement body to ensure the efficient displacement and extraction of fuel from the system. This arrangement promises enhanced fuel storage efficiency, improved fuel management, and ultimately, significant benefits in terms of resource utilization and operational cost savings.

According to an embodiment a liner segment comprises an opening, wherein the opening is configured to give access to a worker to the tank structure via the opening, and wherein the displacement body is configured to be movable inside the tank structure via the opening.

This embodiment introduces a remarkable feature where a worker can enter the tank structure directly through the liner segment, utilizing the dedicated opening. This access point serves as a gateway for inspection, maintenance, or any necessary work within the tank structure.

The mobility of the displacement body within the tank structure via the opening is a noteworthy design aspect. It implies that the displacement body can be adjusted or repositioned within the tank structure without requiring the removal or disassembly of the entire liner segment system. This feature streamlines the process of fine-tuning or servicing the displacement body, contributing to efficient maintenance practices.

According to an aspect an airplane comprises a liner segment according to above mentioned embodiments.

This offers a significantly improved fuel efficiency for the airplane. The liner segment system's innate capacity to maximize fuel storage within tank structures becomes instrumental in reducing fuel consumption, a pivotal factor in aviation for controlling operational costs and addressing environmental concerns.

Furthermore, the enhanced fuel management and displacement capabilities of the liner segment system contribute to more stable flight conditions. In aviation, the system's capabilities can lead to heightened safety levels for both passengers and crew.

Moreover, the liner segment system's ease of maintenance and adjustment, as underscored in previous embodiments, plays a pivotal role in minimizing aircraft downtime for maintenance purposes. This streamlined maintenance process directly impacts the aircraft's operational availability, enhancing overall cost-effectiveness.

Within the framework of a patent application, it is imperative to elucidate how the liner segment system is meticulously adapted for aerospace applications. Describe how it effectively addresses the unique challenges and prerequisites of aviation, and emphasize the prospective advantages concerning fuel efficiency, safety, and maintenance. This serves to illustrate how the integration of this technology not only aligns with the rigorous demands of the aviation industry but also elevates the performance and functionality of airplanes.

### Brief description of the figures

Fig. 1 shows a detailed view of an explosion view of a liner segment system wherein the displacement body is arranged on the upper side of the liner segment base body;
Fig. 2 shows a detailed view of an explosion view of a liner segment system wherein the displacement body is arranged on the lower side of the liner segment base body;
Fig. 3 shows a detailed view of a liner segment system according to Fig. 2;
Fig. 4 shows a detailed view of a displacement body according to Fig. 2 and Fig. 3;
Fig. 5 shows a detailed view of a multitude of detachable displacement sub-devices;
Fig. 6 shows a detailed view of a multitude of detachable displacement sub-devices according to Fig. 5 with a connection construction; and
Fig. 7 shows a detailed view of a tank structure.

### Detailed description

The illustrations in the figures are schematic and not to scale. If the same reference signs are used in different figures in the following description of the figures, they designate identical or similar elements. However, identical or similar elements can also be designated by different reference symbols.

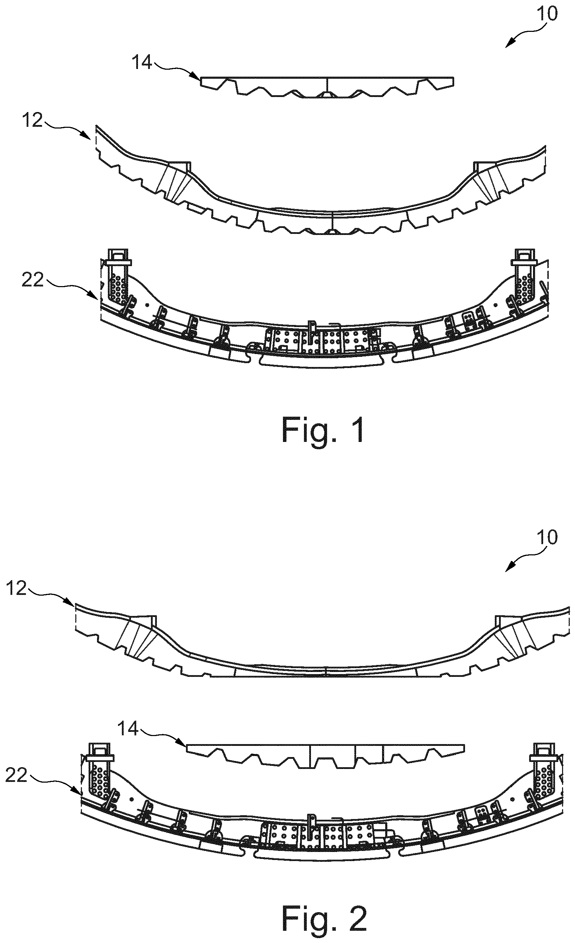

Fig. 1 shows a detailed view of a liner segment system 10 wherein the displacement body 14 is arranged on the upper side of the liner segment base body 12. A liner segment system, referenced as system 10, is configured for a frame bay 18 (not shown) within a fuel tank structure 22.

The liner segment base body 12 is configured to remain afloat on the fuel contained within the fuel tank structure 22. This ensures that the liner segment system effectively utilizes the available space within the tank.

The system 10 includes a displacement body 14 strategically positioned in close proximity to the lowest point of the liner segment base body 12. This positioning is crucial for optimizing the system's primary function. By efficiently displacing fuel at the lowest point of the liner segment base body 12, the displacement body 14 significantly reduces the volume of fuel that remains within the fuel tank structure. This strategic placement contributes to improved fuel storage efficiency.

Fig. 2 shows a detailed view of a liner segment system wherein the displacement body is arranged on the lower side of the liner segment base body. A liner segment system, also referenced as system 10, is configured for a frame bay 18 within a fuel tank structure 22.

The liner segment base body 12 comprises not only an upper side but also a lower side. The displacement body 14 is ingeniously arranged on the lower side of the liner segment base body 12. This strategic placement on the lower side of the base body 12 is crucial for optimizing the system's primary function. By efficiently displacing fuel at the lowest point of the liner segment base body 12, in consequence to the presence of the displacement body 14 on the lower side, the system significantly reduces the volume of fuel that remains within the fuel tank structure. This strategic placement contributes to improved fuel storage efficiency, ensuring that the liner segment system operates at its highest potential.

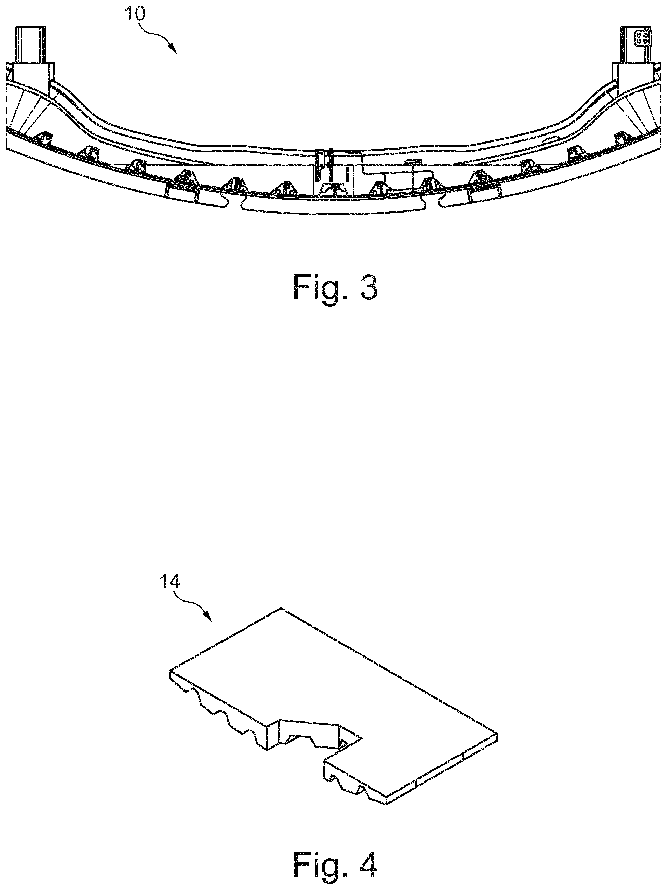

Fig. 3 shows a detailed view of a liner segment system according to Fig. 2. This detailed view shows the liner segment system 10 designed for a specific frame bay 18 within a fuel tank structure 22. The liner segment base body 12 possesses both upper and lower sides, with the displacement body 14 ingeniously arranged on the lower side. This strategic positioning optimizes the system's primary function by efficiently displacing fuel at the lowest point of the liner segment base body, ultimately contributing to enhanced fuel storage efficiency within the fuel tank structure.

Fig. 4 shows a detailed view of a displacement body 14 according to Fig. 2 and Fig. 3. The primary advantage of the displacement body 14 within the liner segment system 10 is its capacity to enhance fuel storage efficiency. By strategically displacing fuel at the lowest point of the liner segment base body 12, the displacement body 14 effectively reduces the volume of fuel that remains within the fuel tank structure 22. This results in several key benefits:
The displacement body 14 allows the system 10 to make more efficient use of the available space within the fuel tank structure 22. This means that a larger volume of fuel can be stored within the same tank dimensions, increasing the overall fuel capacity.

By displacing fuel from the lowest point, the displacement body 14 contributes to improved weight distribution within the tank structure 22. This can have a positive impact on the stability and balance of the vehicle, especially in applications like aviation.

With less residual fuel left in the fuel tank structure 22, the risk of fuel wastage is minimized. This is particularly important in applications where fuel is a valuable resource, as it maximizes fuel utilization and minimizes operational costs.

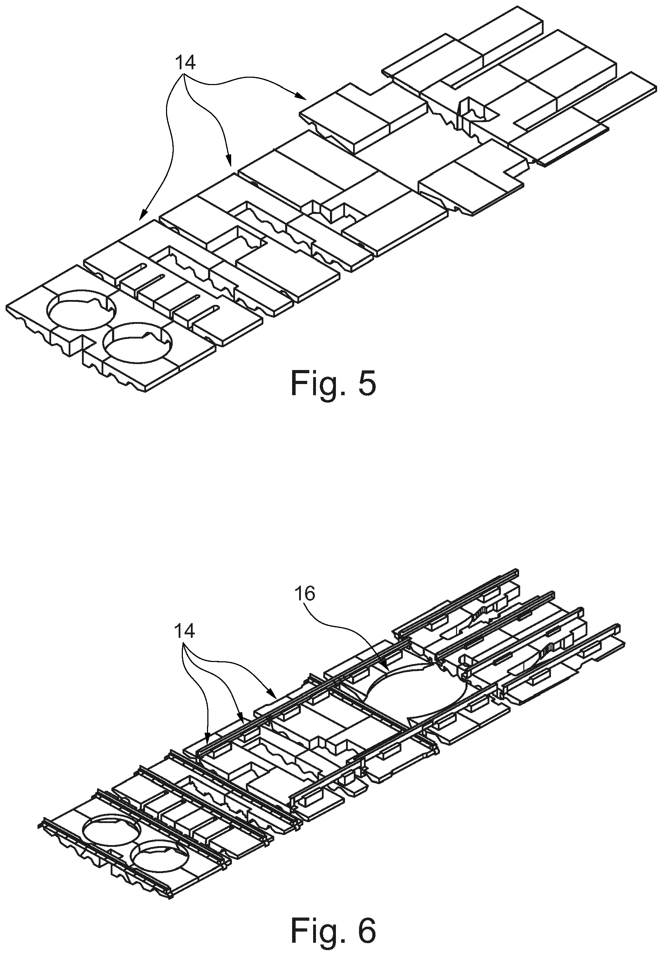

Fig. 5 shows a detailed view of a multitude of detachable displacement sub-devices. The presence of multiple sub-devices allows for scalability and adaptability. Depending on specific requirements, operators can add or remove sub-devices to customize the displacement capacity. This adaptability ensures that the displacement system can efficiently accommodate varying fuel levels or tank sizes. Furthermore, detachable sub-devices simplify maintenance procedures. If a sub-device becomes damaged or requires servicing, it can be individually addressed without the need to disassemble the entire displacement body. This minimizes downtime and reduces maintenance costs. Another advantage is the redundancy provided by multiple sub-devices enhances system reliability. If one sub-device experiences an issue, the others can continue to function, ensuring uninterrupted fuel management operations. Further, operators have greater control over the displacement process. They can fine-tune the displacement capacity by selectively attaching or detaching sub-devices, optimizing fuel management according to specific operational needs. Different sub-devices may also be designed for specific purposes or fuel types, enhancing the system's versatility. This adaptability is particularly valuable in applications with diverse fuel requirements. The use of multiple sub-devices may further ensure that even the smallest pockets of fuel residue are effectively displaced, maximizing fuel utilization and reducing waste.

Fig. 6 shows a detailed view of a multitude of detachable displacement sub-devices according to Fig. 5 with a connection construction. The connection construction facilitates easy attachment and removal of sub-devices, enabling modularity. Operators may customize the displacement capacity by selecting the number and type of sub-devices needed for a particular application. This modularity ensures that the displacement system is tailored precisely to meet specific fuel management requirements. The tie down profiles in longitudinal direction may comprise Aluminium C-profiles 30x20x1.6mm and the tie down profiles in transverse direction may comprise Aluminium L-profiles 30x20x1.6mm.

According to the shown embodiment liner segment system 10 comprises an opening 16, wherein the opening 16 is configured to give access to a worker to the tank structure via the opening 16, and wherein the displacement body is configured to be movable inside the tank structure via the opening 16.

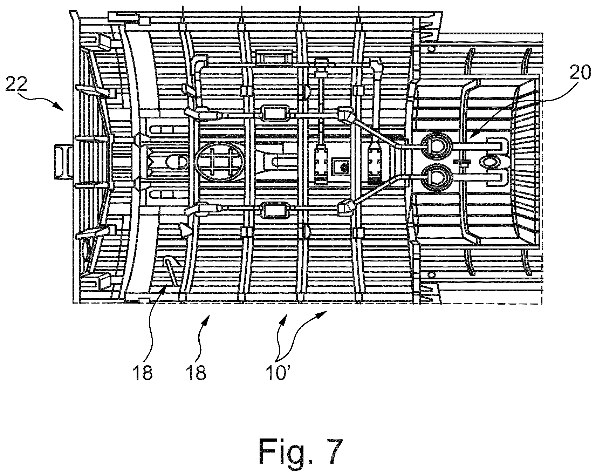

Fig. 7 shows a detailed view of a tank structure 22. Within this arrangement, denoted as 50, tailored for a tank structure 22, the intricate liner segment system 10 as its core component. The arrangement 50 comprises multiple frame bays 18 integrated into the tank structure 22 to optimize fuel storage. These frame bays 18 provide the staging area for the liner segment systems 10, ensuring that each plays a specific role in fuel management.

Furthermore, numerous liner segment systems 10' are provided to float upon the surface of the fuel within the tank structure. Each of these liner segment systems 10' is tailored to match a corresponding frame bay 18. This tailored approach ensures the precise management of fuel within each designated space.

These liner segment systems 10' each consist of liner segment base bodies 12', serving as their foundational elements. A further component of the arrangement 50 is the fuel pump 20, strategically placed to extract fuel from predetermined fuel pump picking points within the tank structure 22.

In essence, this arrangement 50 provides a comprehensive and seamlessly integrated solution for fuel management within the tank structure 22. It leverages the synergy of multiple frame bays, tailor-made liner segment systems, connecting profiles, a fuel pump, and strategically placed displacement bodies (not shown) to optimize fuel storage, extraction, and overall resource utilization within the tank structure.

### Reference Signs

- 10, 10': Liner segment system
- 12: liner segment base body
- 14: displacement body
- 16: opening
- 18: frame bay
- 20: fuel pump
- 22: fuel tank structure
- 50: Arrangement
- 100: Airplane

## Claims

1. A liner segment system (10) for a frame bay (18) of a fuel tank structure (22), comprising:
a liner segment base body (12), wherein the liner segment base body (12) is adapted to float on fuel in the fuel tank structure (22),
a displacement body (14), wherein the displacement body (14) is arranged next to a lowest point of the liner segment base body (12),
such that a remaining portion of fuel within the fuel tank structure is reduced by displacing the fuel at the lowest point of the liner segment base body (12).

2. Liner segment system (10) according to claim 1,
wherein liner segment base body (12) comprises an upper side and the displacement body (14) is arranged on the upper side of the liner segment base body (12).

3. Liner segment system (10) according to claim 1,
wherein liner segment base body (12) comprises a lower side and the displacement body (14) is arranged on the lower side of the liner segment base body (12).

4. Liner segment system (10) according to claim 1,
wherein the displacement body (14) is connected to the liner segment base body (12), preferably via integral construction.

5. Liner segment system (10) according to one of the preceding claims,
wherein the displacement body (14) comprises a foam.

6. Liner segment system (10) according to one of the preceding claims,
wherein the displacement body (14) comprises a hollow body.

7. Liner segment system (10) according to one of the preceding claims,
wherein the displacement body (14) comprises at least one of a group consisting of PE, PP and PVC.

8. Liner segment system (10) according to one of the preceding claims,
wherein the displacement body (16) comprises a multitude of detachable displacement sub-devices.

9. Liner segment system (10) according to one of the preceding claims, wherein the sub-devices are connected in a form-fit manner.

10. Liner segment system (10) according to one of the preceding claims, wherein the displacement body (14) comprises a layer.

11. Liner segment system (10) according to one of the preceding claims, wherein a density of the displacement body (14) is less than 90%, preferably less than 80%, more preferably less than 70% most preferably less than 50% of a density of a fuel to be displaced.

12. Liner segment system (10) according to one of the preceding claims, wherein the displacement body (14) substantially follows the dimensions of the fuel tank structure (22).

13. An arrangement (50) for a tank structure (22), comprising a liner segment system (10) according to claim 1 to 12,
wherein the system further comprises:
a multitude of frame bays (18),
a multitude of liner segment system (10') which is adapted to float on fuel in the tank structure,
wherein each liner segment (10') is adapted to float on fuel in one of the multitude of frame bays (18),
wherein each liner segment (10') comprises a liner segment base body (12'),
a multitude of connection profiles,
wherein the multitude of connection profiles is adapted to connect the multitude of liner segment systems (10') and the liner segment system (10) according to claim 1 to 12,
a fuel pump (20),
wherein in the fuel pump (20) is adapted to pump fuel out of the fuel tank structure (22) at fuel pump picking points,
a displacement body (14), wherein the displacement body (14) is arranged next to a lowest point of at least one of the liner segment base body (12'),
such that a remaining portion of fuel within the fuel tank structure is reduced by displacing the fuel at the lowest point of the liner segment base body (12).

14. Arrangement (50) according to claim 13,
wherein a liner segment system (10) comprises an opening (16), wherein the opening is configured to give access to a worker to the tank structure via the opening (16), and wherein the displacement body (14) is configured to be movable inside the tank structure via the opening (16).

15. An airplane (100) comprising a liner segment system (10) according to claim 1 to 13.
